# EUROPÄISCHE PATENTANMELDUNG

(11) **EP 0 802 324 A1**
(43) Veröffentlichungstag der Anmeldung: **22.10.1997**
(21) Anmeldenummer: 97106260.9
(22) Anmeldetag: 16.04.1997
(51) Int. Cl.: F03D 11/04

(54) **Windkraftanlage**

(30) Priorität: 20.04.1996 DE 19615795; 01.06.1996 DE 19622119
(71) Anmelder: Höricht, Rolf, 65719 Hofheim (DE)
(72) Erfinder: Höricht, Rolf, 65719 Hofheim (DE)
(74) Vertreter: Aue, Hans-Peter, Dipl-Ing.

(57) **Zusammenfassung**

Die Erfindung betrifft eine Windkraftanlage zur Erzeugung elektrischer Energie mittels einer Mehrzahl von Windrotoren (9), die über zumindest einen Generator (13) Strom gewinnen, welcher in ein Stromversorgungsnetz übertragen wird. Mit dieser Anlage soll die Windkraft, gegebenenfalls auch zusätzlich die Sonneneinstrahlung, entlang einer Fahrbahn (24), einer Gleisanlage (1) einer Eisenbahnstrecke oder dergleichen genutzt werden, um umweltfreundlich zusätzliche Energie zur Einspeisung in ein Stromversorgungsnetz zu erzeugen. Die geschieht dadurch, daß die Mehrzahl von Windrotoren (9) an Stützkonstruktionen (4) rotierbar gelagert sind, welche eine Fahrbahn (24) bzw. eine Gleisanlage (1) oder dergleichen unter Einhaltung eines Fahrfreiraumes für die Straßenfahrzeuge (25) bzw. Schienenfahrzeuge (3) und eines Höhensicherheitsabstandes überspannen. Nach einer alternativen Ausführung ist am Tragmast (31) eine die Oberleitung (7) der Gleisanlage (1) haltende Traverse (8) befestigt, wobei der Tragmast (31) auf einem Fundament (6) relativ geringer Abmessung angeordnet ist, das mittels einer Mehrzahl von Erdankereinrichtungen (35) mit dem Erdboden fest verbunden ist.

## Beschreibung

Die Erfindung betrifft eine Windkraftanlage zur permanenten Erzeugung elektrischer Energie mittels atmosphärischem Wind, mit einer Mehrzahl von Windrotoren, die über zumindest einen Generator Strom gewinnen, welcher in ein Stromversorgungsnetz übertragen wird.

Der alternativen Gewinnung von elektrischer Energie durch Windkraft kommt zunehmend wirtschaftliche Bedeutung zu. Verschiedene Möglichkeiten der Energiegewinnung mittels Windkraft sind bereits realisiert worden. So sind eine Reihe von Windkraftanlagen bekannt, beispielsweise mit Flügelrädern versehene Masten, die insbesondere in den windreichen Küstengegenden aufgestellt werden. Eine derartige Windkraftanlage weist ein um eine vertikale Rotationsachse drehbares Windrad auf. Während die Windkraftanlagen mit Horizontalachsenrotoren zur optimalen Windausbeutung mit aufwendigen Regelungseinrichtungen permanent in den Wind gedreht werden müssen, um eine optimale Windausbeutung zu erreichen, haben die Windkraftanlagen mit vertikaler Rotationsachse den Nachteil, daß sie nicht von allein anlaufen können. Sie werden deshalb häufig mit den relativ leicht anlaufenden Savonius-Rotoren kombiniert, die sich durch eine gewölbte Rotorfläche auszeichnen. Nachteilig ist zudem, daß die gewonnene elektrische Energie über große Entfernungen in einen Freileitungs-Abspannmast an den Verbraucher übertragen werden muß, wobei ein hoher Energieverlust eintritt, so daß die Wirtschaftlichkeit dieser Windkraftanlagen nicht genügend hoch ist.

Darüber hinaus sind solche Windkraftanlagen durch einen hohen konstruktiven Aufwand gekennzeichnet und erfordern sehr hohe Investitions- und Betriebskosten sowie einen enorm großen Materialaufwand, der in keinem optimalen Verhältnis zur Wirtschaftlichkeit der Windkraftanlage steht. Die Baukonstruktionen bestehen aus einem Fundament für jeden Mast der Windkraftanlage, der Mastkonstruktion mit dem dazugehörigen Windrad, einer Transformationsstation für eine oder mehrere der Windkraftanlagen sowie aus Wege- und Erdkabeltrassen, mit denen die elektrische Energie zur Transformationsstation übertragen und von dort in ein die elektrische Energie benötigendes Gebäude oder in eine von einem Abspannmast getragene Freileitung überführt wird. Für die Mastkonstruktion sind enorm große und aufwendig herzustellende Fundamente notwendig. Bei einer Windkraftanlage in einer vergleichbaren Größenordnung, beispielsweise mit einer Leistung von etwa 250 KW, einer entsprechenden Höhe von mehreren Dutzend Metern und einem entsprechendden Durchmesser des Windrotors, treten nicht nur vertikale Lasten, die in diesem Fall ca. 20t bei einer Bodenpressung von etwa 2 kp/cm² betragen können, sondern auch horizontale Kräfte und Rotationskräfte auf, die am Tragmast dieser Höhe in verschiedenen Richtungen angreifen. Dadurch entsteht eine hohe Neigung zum Kippen des Tragmastes. Für eine solche Windkraftanlage wäre eine biegesteife Fundamentplatte von ungefähr 9m x 9m, also von ca. 80 m² als Plattenfundament erforderlich. Nachteilig ist weiterhin, daß insbesondere an den Trassenstrecken, die unmittelbar an fremde Grundstücke angrenzen, diese Fundamente zwangsläufig in diese Grundstücke hineinragen, was erhebliche zusätzliche Kosten und aufwendige Genehmigungsverfahren bewirkt. Hinzu kommt, daß die Stützkonstruktionen zusätzlich zu den bereits vorhandenen Tragmasten für die Oberleitung des Stromversorgungsnetzes der Schienenfahrzeuge notwendig sind.

Bei der Neuerrichtung dieser vorgenannten Windkraftanlage sind aufwandsintensive Genehmigungsverfahren von Behörden, Anliegern, Umweltämtern, Energieversorgungsunternehmen usw. notwendig, die eine lange Zeit beanspruchen und oftmals daran scheitern. Dies verkompliziert weiterhin die Errichtung und den Betrieb dieser Windkraftanlagen. Daher ist man auf der Suche nach weiteren Möglichkeiten der Energiegewinnung durch Windkraft, insbesondere im küstenfernen Bereich. So versucht man Brückenbauwerke in die Energiegewinnung durch Windkraft einzubeziehen, da derartige Bauwerke meistens sehr hoch sind und Täler überspannen und somit naturgemäß einem hohen Windaufkommen ausgesetzt sind.

Aus der DE 38 32 997 A1 ist eine Anlage zur Gewinnung von Energie mittels einer Vielzahl von Windrädern bekannt, deren Stromerzeugung zusammengefaßt verwertet wird und insbesondere zur Wasserstofferzeugung vorgesehen ist. Hierbei werden trommelförmige Windräder entlang einer Straße in dem von den Kraftfahrzeugen erzeugten und/oder dem unter Brücken vorhandenen Luftzug angeordnet. Eine Vielzahl kleiner trommelförmiger Windräder wird auch unter dem Brückenüberbau in horizontaler oder vertikaler Weise aufgehängt. Nachteilig hierbei ist, daß die trommelförmigen Windräder, die bautechnisch eine relativ hohe Masse besitzen, nur eine geringe Baugröße aufweisen können, da diese durch die hängende Anbringung an der Unterseite des Brückenüberbaus instabil sind. Sie können daher nur eine sehr begrenzte winddurchströmte Fläche der Brückenkonstruktion ausnutzen und demzufolge nur eine relativ geringe Energiemenge erzeugen. Für besonders hohe Brücken ist die Anbringung einer Mehrzahl von hängenden Windrädern somit unwirtschaftlich. Hinzu kommt, daß bei einer Vielzahl solcher hängenden Windräder kleiner Baugröße jedem dieser Windräder ein Generator zugeordnet werden muß, so daß die Kosten hierfür unverhältnismäßig hoch sind.

Darüber hinaus sind aus der nicht vorveröffentlichten DE 196 11 518 A1 Windkraftanlagen zur Erzeugung elektrischer Energie mit einer Mehrzahl von an Brücken angebrachten Windrotoren bekannt, die über zumindest einen Generator Strom gewinnen, welcher vorzugsweise in Freileitungs-Abspannmasten übertragen wird. Hierzu ist jeder Windrotor mit seiner vertikalen Rotorwelle zwischen benachbarten Brückenpfeilern angeordnet, wobei das obere Ende der Rotorwelle im oberen Brückenbereich und das untere Ende der Rotorwelle in Verbindungselementen gelagert ist, die das untere Ende der Rotorwelle an den Brückenpfeilern abstützen. Durch die vorgenannten Lösungen sind die Möglichkeiten der Energiegewinnung mittels Windkraft jedoch noch nicht erschöpft.

Es ist daher Aufgabe der Erfindung, eine Windkraftanlage der eingangs genannten Art zu schaffen, mit der die Windkraft, gegebenenfalls auch zusätzlich die Sonneneinstrahlung, entlang einer Fahrbahn, einer Gleisanlage einer Eisenbahnstrecke oder dergleichen genutzt werden kann, um mit einem hohen wirtschaftlichen Nutzeffekt und geringem baulichem Aufwand umweltfreundlich zusätzliche Energie zur Einspeisung in ein Stromversorgungsnetz zu erzeugen.

Erfindungsgemäß wird die Aufgabe dadurch gelöst, daß die Mehrzahl von Windrotoren an Stützkonstruktionen rotierbar gelagert sind, welche eine Fahrbahn bzw. eine Gleisanlage oder dergleichen unter Einhaltung eines Fahrfreiraumes für die Straßenfahrzeuge bzw. Schienenfahrzeuge und eines Höhensicherheitsabstandes überspannen. Hierdurch werden eine Vielzahl von Windrotoren im Verlauf einer Fahrtrasse für Straßenfahrzeuge oder entlang einer Eisenbahntrasse für Schienenfahrzeuge über eine längere Distanz angeordnet, die in der Regel über große Freiflächen führen. Diese Freiflächen werden besonders von Wind durchströmt, so daß eine große Strommenge erzeugt werden kann. Im Abstand von beispielsweise mindestens 10 Metern zueinander können auf den Stützkonstruktionen eine Vielzahl von Windrotoren montiert werden, um eine möglichst große Windangriffsfläche auszunutzen. Die Windkraftanlage hat weiterhin den besonderen Vorteil, daß z.B. für die Eisenbahntrasse bereits Gleisanlagen und elektrische Oberleitungen vorhanden sind, so daß die Windrotoren im wesentlichen nur Höhe in Anspruch nehmen.

Besonders geeignet für diesen Zweck sind Windrotoren, die jeweils eine vertikal ausgerichtete Rotorwelle aufweisen. Dementsprechend ist jeder der Windrotoren mit dem unteren Ende seiner Rotorwelle rotierbar an den Stützkonstruktionen gelagert.

Darüber hinaus ist in weiterer Ausbildung der Erfindung vorgesehen, daß das obere Ende der Rotorwelle jedes Windrotors mittels Halteelementen an den Stützkonstruktionen befestigt und stabilisiert ist.

Zweckmäßigerweise bestehen die Halteelemente aus Spannseilen, Streben, Querträgern oder dergleichen, die an den Stützkonstruktionen verankert sind. Somit werden die aufrecht angeordneten Windrotoren beispielsweise über Spannseile derart an den Stützkonstruktionen stabilisiert, daß diese einer hohen Windangriffskraft widerstehen können.

Nach einer anderen Ausbildungsform der Erfindung bestehen die Halteelemente aus Gittermasten zur Halterung von wenigstens jeweils zwei Windrotoren, die an der Stützkonstruktion verankert sind. Die Gittermasten können vorteilhafterweise nach Art üblicher Stromgittermasten ausgebildet sein und selbst Freileitungen eines Stromversorgungsnetzes tragen. Über Quertraversen werden die oberen Enden der Windrotoren gegenüber den Stützkonstruktionen abgestützt und stabilisiert. Somit können die Stützkonstruktionen als Rahmenbauwerk ausgebildet werden. Dadurch wird eine komplexe Gesamttragekonstruktion gebildet, die einfach zu montieren ist.

Von besonderem Vorteil ist, wenn die Stützkonstruktionen aus bogenförmigen, quer zur Fahrbahn bzw. Gleisanlage ausgerichteten Stahlbetonstützen oder Gittermasten bestehen. Darüber hinaus können die bogenförmigen Stützkonstruktionen über zumindest einen Längsträger miteinander verbunden werden. Hierdurch wird eine Vielzahl von Stützkonstruktionen in konstruktiver Hinsicht über größere Entfernungen stabilisiert, so daß eine große Anzahl von Windrotoren getragen werden können.

Unterschiedliche Anordnungen von Windrotoren entlang der Stützkonstruktionen sind realisierbar. So können einerseits die Windrotoren entlang der Fahrbahn bzw. Gleisanlage in deren Längsrichtung oder Querrichtung hintereinander und nebeneinander und andererseits sowohl in Längsrichtung als auch in Querrichtung zueinander versetzt an den Stützkonstruktionen angeordnet sein. Bei diesen unterschiedlichen Anordnungsmöglichkeiten der Windrotoren wird schon in einem begrenzten Raum die Windangriffsfläche optimal ausgenutzt ohne daß sich die Windrotoren gegenseitig beeinflussen.

Um die Windkraft in elektrische Energie umwandeln zu können, ist jedem Windrotor ein Generator zugeordnet. Darüber hinaus ist es zweckmäßig, wenn in bestimmten Abständen entlang der Fahrbahntrasse oder der Eisenbahntrasse ein Sammeltransformator für eine Mehrzahl von Windrotoren vorgesehen ist, der den von den Generatoren der Windrotoren abgegebenen Strom auf eine Spannung transformiert, die der einem Stromversorgungsnetz entspricht, in die der erzeugte Strom eingespeist werden soll.

Bevorzugt sind die Windrotoren Savonius-Rotoren und/oder Darrieus-Rotoren und/oder H-Rotoren und/oder Flügel-Rotoren. Hierbei sind selbstverständlich unterschiedliche Kombinationen der einzelnen Rotoren miteinander und über die Länge der Fahrbahntrasse bzw. Eisenbahntrasse oder dergleichen möglich. Darüber hinaus ist es besonders zweckmäßig, wenn die die Windrotoren lagernden bogenförmigen Stützkonstruktionen gleichzeitig auch die Oberleitung einer elektrifizierten Eisenbahnstrecke tragen, was insbesondere beim Neubau von Eisenbahntrassen relevant ist.

Von besonderem Vorteil ist es, daß der gewonnene Strom in ein öffentliches Stromversorgungsnetz oder ein Betriebsstromnetz zur Versorgung einer elektrifizierten Eisenbahnstrecke eingespeist wird. Dadurch wird zusätzlicher Strom für das öffentliche Stromnetz zur Verfügung gestellt. Des weiteren kann der gewonnene Strom zum Betreiben einer elektrifizierten Eisenbahnstrecke genutzt werden.

In weiterer Ausbildung des Erfindungsgedankens sind die Stützkonstruktionen jeweils mit Solarzellenfeldern ausgerüstet. Damit wird zusätzlich die Sonneneinstrahlung zur Erzeugung daraus gewonnener Energie genutzt, so daß zusätzlicher Strom in Stromversorgungsnetze eingespeist werden kann. Um die Sonneneinstrahlung vollständig ausnutzen zu können, sind nach einer Ausführungsform der Erfindung die Solarzellenfelder in Abhängigkeit von der Sonneneinstrahlung verstellbar. Nach einer anderen Ausführungsform der Erfindung können die Solarzellenfelder längs und/oder quer zur Fahrbahn bzw. Gleisanlage an den Stützkonstruktionen angeordnet sein, so daß immer eine Ausrichtung der Solarzellenfelder auf die einstrahlende Sonne ermöglicht wird.

Alternativ wird die Aufgabe auch dadurch gelöst, daß am Tragmast eine die Oberleitung der Gleisanlage haltende Traverse befestigt ist und daß der Tragmast auf einem Fundament relativ geringer Abmessung angeordnet ist, das mittels einer Mehrzahl von Erdankereinrichtungen mit dem Erdboden fest verbunden ist. Durch diese Maßnahmen wird ein besonders hoher wirtschaftlicher Nutzeffekt erzielt, da die Tragmasten bzw. Traversen zur Halterung der Oberleitung der Gleisanlage als solche nicht mehr benötigt werden. Vielmehr kann die Oberleitung des Stromversorgungsnetzes für die elektrisch betriebenen Schienenfahrzeuge nun unmittelbar am Tragmast für die Windkraftanlage befestigt werden. Bereits aus dieser Sicht ergibt sich eine hohe Wirtschaftlichkeit der Windkraftanlage. Besonders sinnvoll und wirtschaftlich ist die erfindungsgemäße Windkraftanlage durch die Aneinanderreihung einer Vielzahl solcher Windkraftanlagen in Verbindung mit der Oberleitung der Eisenbahnstrecke. Eine Eisenbahnstrecke ist bereits durch die Gleisanlage, die Oberleitung für das Stromnetz und auch durch die entstehenden Fahrgeräusche vorbelastet, so daß die Hinzufügung einer Vielzahl von Windkraftanlagen diesbezüglich keine weiteren negativen und umweltschädigenden Einflüsse hat. Da die Gleisanlagen mit allen dazugehörigen Einrichtungen in der Regel einem einzigen Eigentümer gehören und somit aufwendige Genehmigungsverfahren zur Errichtung der Windkraftanlagen nicht notwendig sind, wird auch hierdurch die Wirtschaftlichkeit weiter verbessert.

Durch die Verwendung einer Mehrzahl Erdankereinrichtungen, die fest mit dem Erdboden verbunden sind, ist nur noch ein Fundament mit relativ geringen Abmessungen erforderlich. Die Größe der Fundamentplatte wird durch den Durchmesser des Tragmastes der Windkraftanlage bestimmt. Beträgt der Durchmesser des Mastes beispielsweise 1,50m, ergäbe sich eine Fundamentplattenabmessung von etwa 2m x 2m. Auf geringstem Raum wird somit ein Fundament für eine Windkraftanlage zur Verfügung gestellt, welches wirtschaftlich und kostengünstig herstellbar ist und nur einen geringen Platzbedarf erfordert, wobei die hohen, am Tragmast auftretenden dynamischen Rotationskräfte der Windrotoren, vorzugsweise Flügelräder, aufgefangen werden.

Zweckmäßigerweise trägt die Traverse die Oberleitungen für einen oder mehrere Gleiskörper der Gleisanlage, so daß auch hierfür jeweils nur ein Tragmast notwendig ist. So kann nach einer ersten Ausbildung der Erfindung die Traverse in einer radialen Richtung vom Tragmast über die Gleisanlage ragen. Nach einer anderen Ausbildung der Erfindung kann die Traverse, je nach den baulichen Gegebenheiten auch in zwei entgegengesetzte radiale Richtungen vom Tragmast über die Gleisanlage ragen.

Nach einer weiteren Alternative wird die Aufgabe auch dadurch gelöst, daß der Tragmast auf einer einzelnen, freistehenden, unter Bildung einer Traverse die Oberleitung der Gleisanlage haltenden bockartigen Stützkonstruktion befestigt ist, die auf einem Fundament relativ geringer Abmessung angeordnet ist. Bei dieser Windkraftanlage treten sinngemäß die gleichen bereits beschriebenen Vorteile und Wirkungsweisen auf. Ein weiterer Vorteil besteht darin, daß die einzelnen Stützkonstruktionen jeweils unabhängig voneinander aufgestellt werden können. Durch diese Art der Stützkonstruktion wird die Traverse durch einen Teil der bockartigen Stützkonstruktion gebildet, nämlich durch einen die im Erdboden fundamentierten und beidseitig der Gleisanlage aufgestellte Stützen der Stützkonstruktion verbindenden und horizontal angeordneten Querriegel. Dabei kann die Stützkonstruktion ein oder mehrere Gleiskörper der Gleisanlage überspannen und weiterhin mehrere der beidseitig der Gleisanlage aufgestellte Stützen aufweisen, die im Erdboden fundamentiert sind.

Bevorzugt ist auch bei diesen beiden alternativen Lösungen, daß der Tragmast bzw. die freistehende bockartige Stützkonstruktion mittels einer Mehrzahl von Erdankereinrichtungen fest im Erdboden fundamentiert ist.

In bevorzugter Ausführungsform der Erfindung besteht das Fundament im wesentlichen aus einer Fundamentplatte, einem an deren Unterseite lotrecht angebrachten Fundamentpfahl und der Mehrzahl von Erdankereinrichtungen. Dadurch wird einer Neigung zum Kippen des Tragmastes entgegengewirkt. Zur Vermeidung dieses Kippmomentes ist besonders eine Fundamentpfahlbohrung in das Erdreich vorgesehen, in die der Fundamentpfahl eingegossen wird und die bei einer Last der Windkraftanlage von etwa 20t und einer Bodenpressung von etwa 2 kp/cm² schon bei normalen Bodenverhältnissen die vertikale Last abträgt.

Die Horizontalkräfte sollen vorzugsweise durch die Erdankereinrichtungen beliebigen Konstruktionsprinzips, beispielsweise einer Mehrzahl von Erdanker-Dauernägeln aufgenommen werden, die in Bezug auf den Umfang des Tragmastes bzw. der Stütze gleichmäßig versetzt zueinander in einer im wesentlichen horizontalen Ebene oder leicht schräg geneigt nach unten in das Erdreich einerseits in der Fundamentplatte und andererseits im Erdboden verankert sind. Bevorzugt ist hierbei, daß drei Erdankereinrichtungen in Bezug auf den Umfang des Tragmastes bzw. der Stütze etwa 120° zueinander versetzt in der Fundamentplatte und im Erdboden verankert sind, um das Fundament, welches gleichzeitig den Fuß des Tragmastes bildet, kraftschlüssig und bewegungsfrei zu halten. Eine mögliche Erdankereinrichtung kann beispielsweise darin bestehen, daß hierzu jeweils ein darmartig gewelltes Kunststoffrohr vorgesehen ist, in welches Spannstahl als Erdankernägel eingeführt wird, der immer einen gleichen Abstand zur Rohrwandung hat. Das Kunststoffrohr mit dem Spannstahl wird in das Erdreich hineingesetzt und mittels hochwertigem Beton mit hohem Druck im Erdreich verpreßt. Dann wird dieser Spannstahl angespannt, damit eine kraftschlüssige Verbindung zwischen Erdreich und Erdanker entsteht. Somit werden die Erdankernägel einerseits in die Fundamentplatte eingegossen und andererseits mittels Beton im Erdboden verpreßt. Diese Erdanker sind sehr hoch belastbar. Die Länge und der Querschnitt der Erdankereinrichtungen bzw. Erdankernägel sind selbstverständlich von der Bodenfestigkeit und Bodenbeschaffenheit abhängig. Aber auch andere ähnliche Konstruktionsprinzipien sind bekannt und für diese Zwecke einsetzbar.

Von besonderem Vorteil ist, daß die Erdankernägel höchstens eine Länge aufweisen, die eine benachbarte Grundstücksgrenze nicht überschreitet, um zusätzliche hohe Kosten und aufwendige Genehmigungsverfahren zur Errichtung der Windkraftanlagen zu vermeiden.

Bevorzugt ist weiterhin, daß zumindest einer der Erdankernägel unter der Gleisanlage hindurchgeführt wird. Zweckmäßigerweise wird der längste Erdanker leicht geneigt unter den Gleiskörper bis auf die gegenüberliegende Seite der Gleiskörperanlage hin geführt, während die übrigen Erdanker nur wenig Platz vom Gleiskörper entfernt benötigen. Damit wird vermieden, daß sich die Verankerung bis in nahegelegene fremde Grundstücke erstrecken. Selbstverständlich können auch mehr als drei solche Erdanker vorgesehen werden. Durch diese Verankerung des Tragmastes wird die an der Bahntrasse zur Verfügung stehenden Grundstücksfläche zwischen Gleisanlage und benachbarter Grundstücksgrenze optimal ausgenutzt.

Zusammen mit der die Oberleitung der Eisenbahnstrecke tragenden Traverse ergibt sich eine wirtschaftliche sinnvolle Einheit einer Windkraftanlage. Dadurch wird ein besonderer Vorteil darin erzielt, daß ein Bahnbetreiber nicht mehr die Tragmasten für die Oberleitung benötigt, sondern er kann jetzt die Oberleitung durch diese Traverse an den Tragmast der Windkraftanlage hängen.

Schließlich weist in weiterer Ausbildung dieser erfindungsgemäßen Windkraftanlage jede der Stützen der Stützkonstruktion an ihrem oberen bzw. unteren Ende eine Anzahl von Vouten auf, die mit der Traverse bzw. dem Fundament verbunden sind und jeweils eine bauliche Einheit bilden. Die Vouten sind hierbei derart ausgerichtet, daß sie den die Stützkonstruktion angreifenden horizontalen und vertikalen Kräften entgegenwirken.

Durch diese Erfindung wird eine Windkraftanlage zur Verfügung gestellt, die auf wirtschaftliche Weise und umweltfreundlich eine hohe Energiemenge zur Stromversorgung zur Verfügung stellt. Ein besonders bemerkenswerter Vorteil wird dadurch erzielt, daß benachbarte Grundstücke, die Fremdeigentümern gehören, von den baulichen Errichtungsmaßnahmen der erfindungsgemäßen Windkraftanlage nicht nennenswert betroffen sind.

Die Erfindung wird im folgenden an mehreren Ausführungsbeispielen unter Bezugnahme auf die zugehörigen Zeichnungen näher beschrieben. In den Zeichnungen zeigt:
- Fig. 1: eine Seitenansicht einer erfindungsgemäßen Ausführungsform der Windkraftanlage an einer Eisenbahntrasse;
- Fig. 2: eine Draufsicht auf die Windkraftanlage gemäß Fig. 1;
- Fig. 3: eine Schnittansicht an einer beliebigen Stelle der Ausführungsform nach den Fig. 1 und 2;
- Fig. 4: eine Schnittansicht einer abgewandelten Ausführungsform nach den Fig. 1;
- Fig. 5: eine Draufsicht auf die Ausführungsform nach Fig. 4;
- Fig. 6: eine Schnittansicht an einer beliebigen Stelle einer weiteren erfindungsgemäßen Ausführungsform der Windkraftanlage an einer Eisenbahntrasse;
- Fig. 7: eine Draufsicht auf die Ausführungsform nach Fig. 6;
- Fig. 8: eine Seitenansicht einer weiteren abgewandelten Ausführungsform der Windkraftanlage nach Fig. 1 an einer Eisenbahntrasse;
- Fig. 9: eine Draufsicht auf die abgewandelte Ausführungsform nach Fig. 8;
- Fig. 10: eine Seitenansicht einer abgewandelten Ausführungsform nach Fig. 8 an einer Fahrbahntrasse;
- Fig. 11: eine Draufsicht auf die abgewandelte Ausführungsform nach Fig. 10;
- Fig. 12 bis 14: Queransichten an einer Fahrbahntrasse mit jeweils unterschiedlichen Arten von Windrotoren nach einer weiteren erfindungsgemäßen Ausführungsform; und
- Fig. 15: eine kombinierte Quer- und Draufsicht auf eine Fahrbahntrasse mit jeweils unterschiedlichen Arten von Windrotoren nach den Fig. 12 bis 14.
- Fig. 16: eine Perspektivansicht einer erfindungsgemäßen Windkraftanlage an einer Gleisanlage für elektrisch betriebene Schienenfahrzeuge,
- Fig. 17: eine Perspektivansicht einer anderen Ausführungsform der Windkraftanlage nach Fig. 16,
- Fig. 18: eine Perspektivansicht einer Windkraftanlage an einer Gleisanlage in einer alternativen Ausführungsform, und
- Fig. 19: eine Perspektivansicht einer Windkraftanlage in einer abgewandelten Ausführungsform nach Fig. 18.

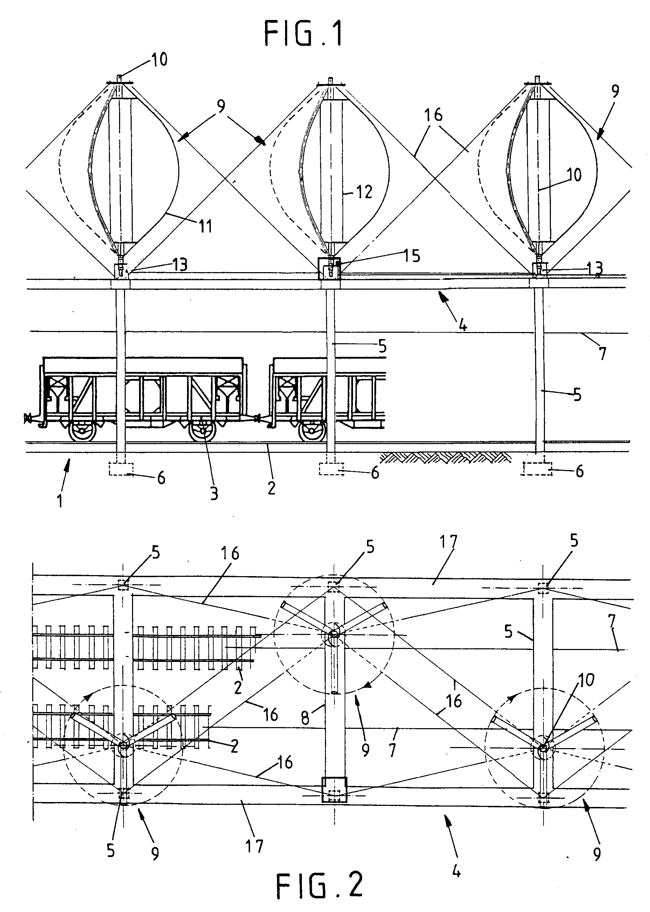

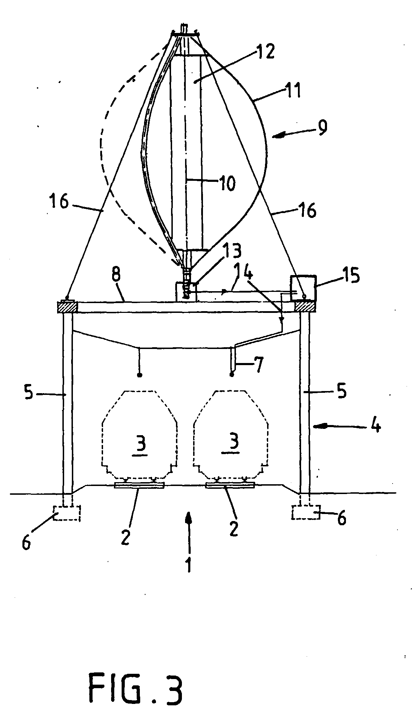

Die erfindungsgemäße Windkraftanlage nach den Fig. 1 bis 3 ist an einer Gleisanlage 1 einer Eisenbahntrasse angeordnet. Die Gleisanlage 1 umfaßt mehrere Gleise 2, auf denen ein Eisenbahnzug 3 verkehrt.

Über die Gleisanlage 1 erstreckt sich in deren Längsrichtung eine Stützkonstruktion 4. Die Stützkonstruktion 4 besteht im wesentlichen aus einer Vielzahl von in Längsrichtung der Gleisanlage 1 beabstandeten bogenförmigen Stützen 5, die jeweils in ein Fundament 6 im Boden der Gleisanlage 1 eingebracht sind. An diesen Stützen 5 ist die Oberleitung 7 der elektrifizierten Eisenbahntrasse aufgehängt. Die beispielsweise aus Stahlbeton-, Stahlrohr-, Gittermasten oder dergleichen bestehenden Stützen 5 sind jeweils durch eine Traverse 8 miteinander verbunden, um die Bogenform zu bilden.

Auf den Traversen 8 der bogenförmigen Stützen 5 ist jeweils ein Windrotor 9 montiert, der eine vertikale Rotorwelle 10 aufweist. Nach dieser Ausführungsform ist jeder Windrotor 9 als Darrieus-Rotor 11 ausgebildet, der um seine Rotorwelle 10 einen Savonius-Rotor 12 als Anlaufhilfe für den Windrotor 9 umfaßt. Das untere Ende der Rotorwelle 10 ist rotierbar in der Traverse 8 der Stütze 5 gelagert, wobei jeweils ein Generator 13 zur Umwandlung der Windkraft in elektrische Energie zwischengeschaltet ist. Über eine Leitung 14 sind die Generatoren 13 mit einem Sammeltransformator 15 verbunden, der den von den Generatoren 13 erzeugten Strom auf eine Spannung transformiert, die der in einem Stromversorgungsnetz entspricht, in das der gewonnene Strom eingespeist werden soll.

Der aufrecht angeordnete Windrotor 9 ist mit dem oberen Ende seiner Rotorwelle 10 über Spannseile 16 mit der jeweils zugehörigen Stütze 5 in stabilisierender Weise verbunden. Dadurch wird der Windrotor 9 in seiner aufrechten Stellung gehalten und gegen die Wandangriffslast gesichert.

Wie insbesondere aus den Fig. 1 und 2 ersichtlich ist, sind die bogenförmigen Stützen 5 über Längsträger 17 miteinander verbunden, so daß sich eine Gesamttragekonstruktion in Form eines Rahmenbauwerks ergibt, das zweckmäßigerweise aus Montage-Fertigteilen besteht.

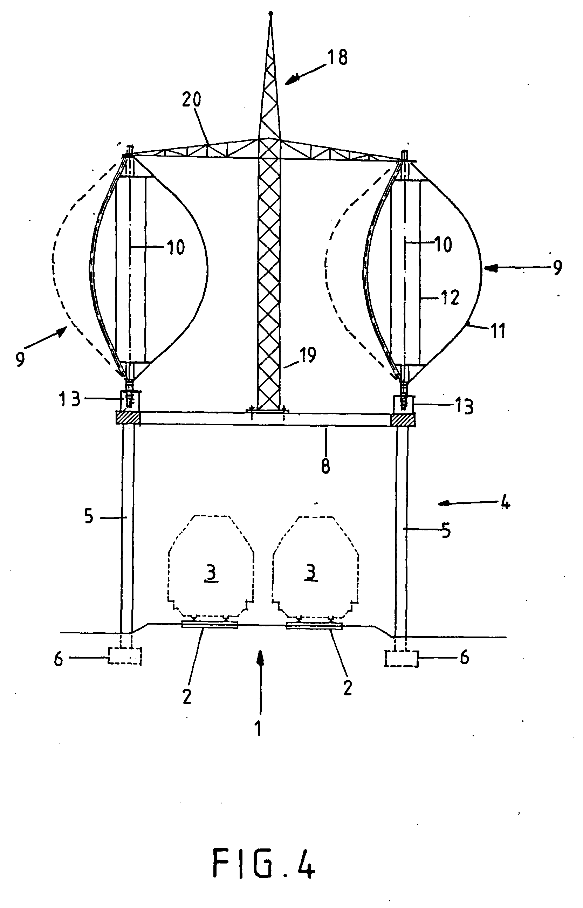

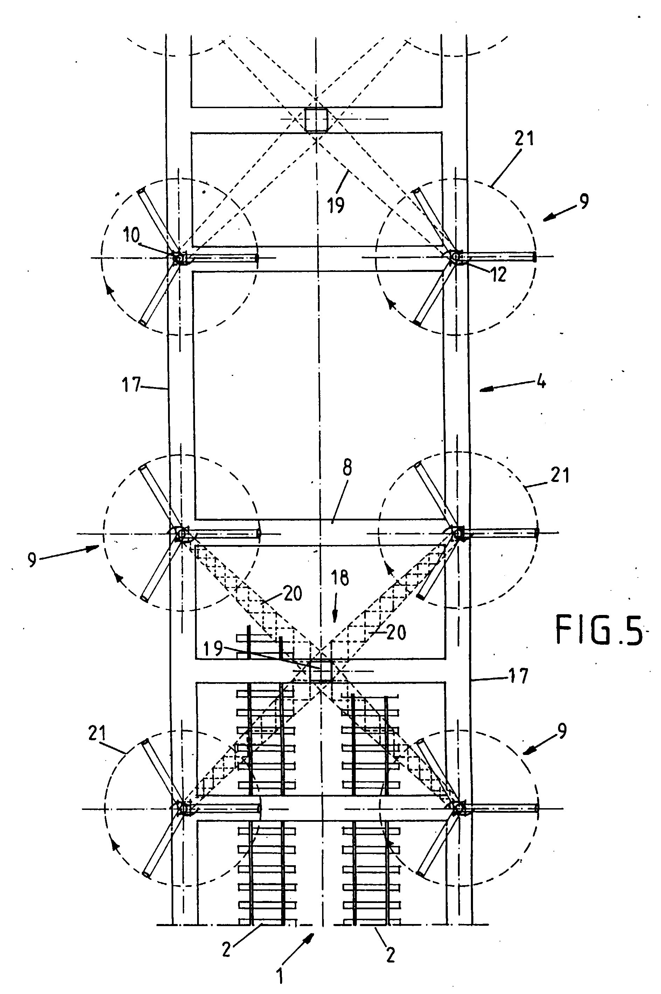

Bei der abgewandelten Ausführungsform der Windkraftanlage nach den Fig. 4 und 5 ist als Halteelement 18 für die Windrotoren 9 ein Gittermast 19 vorgesehen, der an den Enden seiner Quertraverse 20 jeweils das obere Ende der Rotorwelle 10 des Windrotors 9 aufnimmt. Hierbei ist der Gittermast 19 selbst an der Traverse 8 der jeweiligen Stütze 5 der Stützkonstruktion 4 befestigt. Vorteilhaft bei dieser Lösung ist, daß mittels des Gittermastes 19 mehrere Windrotoren 9 an einer Stütze 5 angeordnet werden können. In Fig. 5 sind die Windrotor 9 als H-Rotoren 21 ausgebildet, die gleichfalls einen Savonius-Rotor 12 als Anlaufhilfe umfassen.

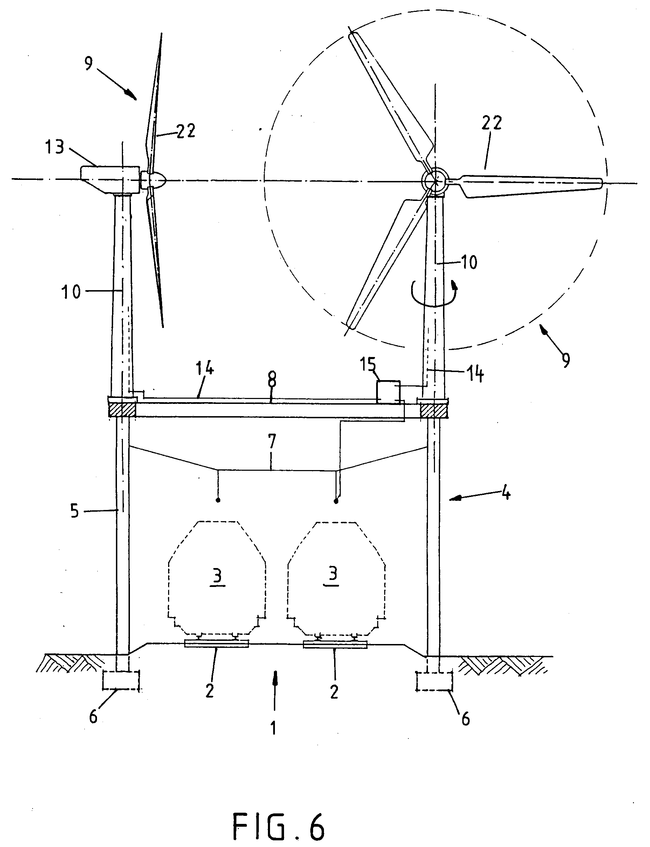

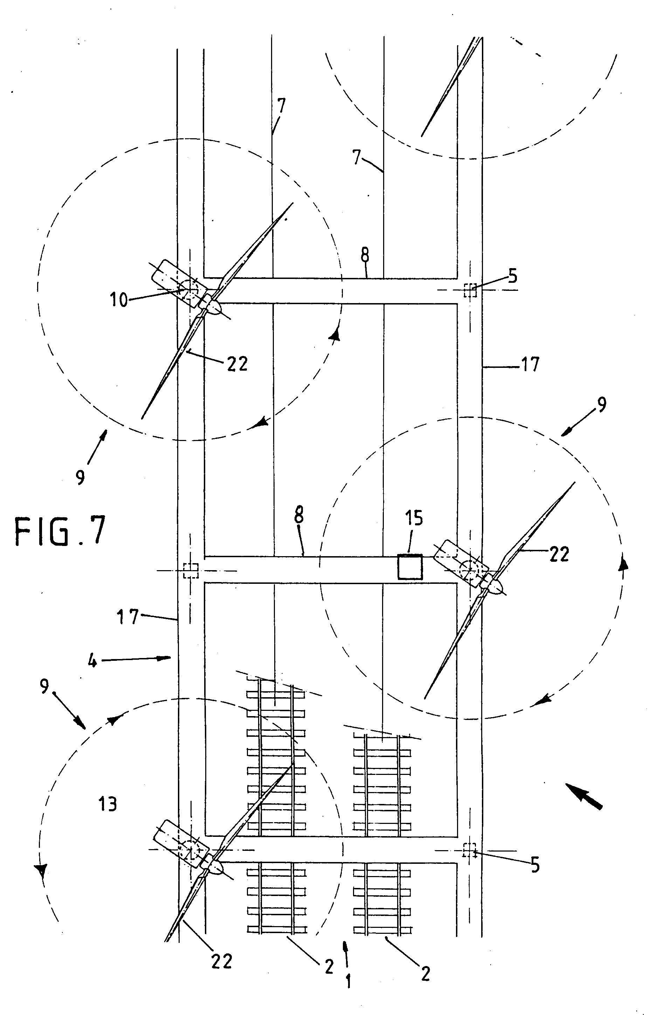

Die Ausführungsform der erfindungsgemäßen Windkraftanlage nach den Fig. 6 und 7 unterscheidet sich hinsichtlich der Eisenbahntrasse und der Stützkonstruktion 4 nicht von der Ausführungsform gemäß den vorangegangenen Fig. 1 bis 5. Jedoch sind hierbei die üblichen Flügelräder 22 als Windrotoren 9 ausgebildet. Diese Flügelräder 22 sind auf einer vertikalen Rotorwelle 10 verschwenkbar. Das Flügelrad 22 selbst rotiert um eine horizontale Welle, die in ein Gehäuse mündet, das als Generator 13 ausgebildet ist. Während der Windrotor 9 insgesamt durch die vertikale Rotorwelle 10 in einer horizontalen Ebene rotiert, drehen die Flügelräder 22 in einer vertikalen Ebene.

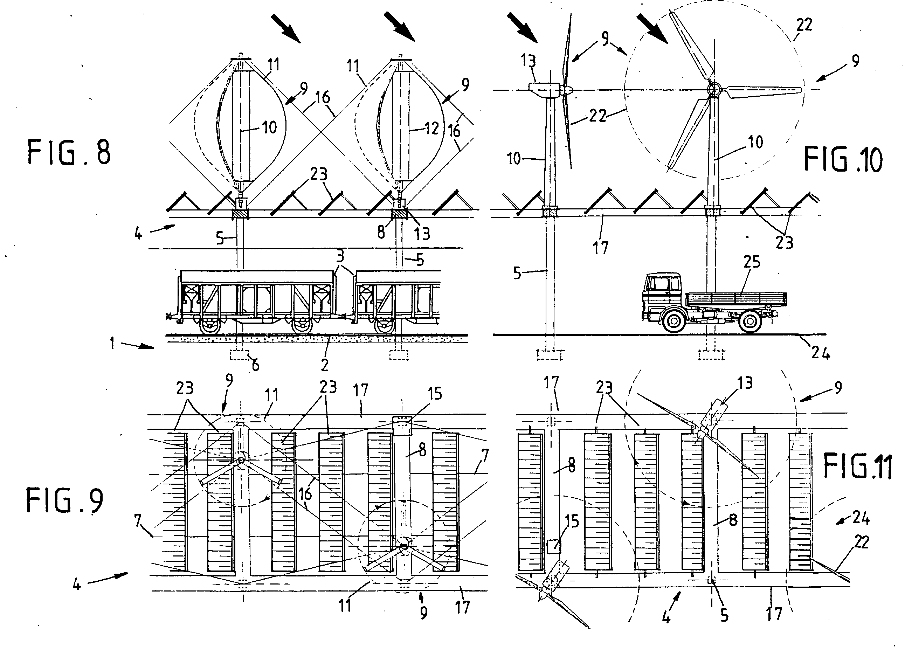

Fig. 8 und 9 zeigen eine erfindungsgemäße Ausführungsform, die im wesentlichen der nach den Fig. 1 bis 3 entspricht. Zusätzlich sind hierbei Solarzellenfelder 23 quer zum Verlauf der Gleisanlage 1 auf der Stützkonstruktion 4 angeordnet, um zusätzliche Sonnenenergie zu erzeugen und in elektrische Energie umzuwandeln. Die Sonneneinstrahlung ist durch die Pfeile schematisch dargestellt. Die durch die Solarzellenfelder 23 gewonnene elektrische Energie wird gleichfalls über einen Sammeltransformator 15 in ein Stromversorgungsnetz zusätzlich eingespeist. Zur Energiegewinnrnng können auch eine Mehrzahl von Photovoltaiks in gleicher Weise angeordnet werden, wie die Solarzellenfelder.

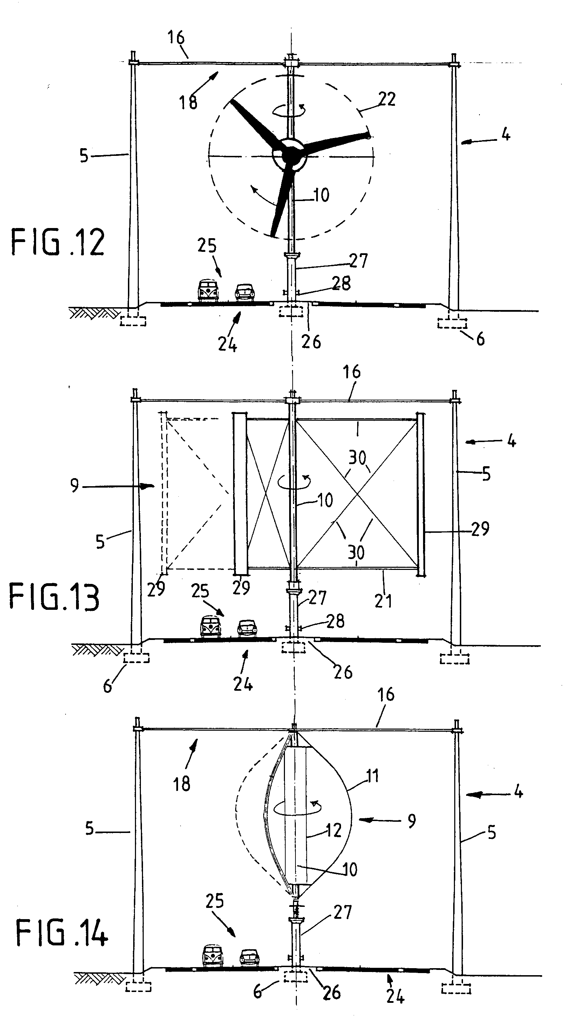

Die Fig. 10 und 11 zeigen eine ähnliche Ausführungsform nach den Fig. 8 und 9, jedoch bezogen auf eine Fahrbahntrasse 24 für Straßenfahrzeuge 25. Auch hier sind auf der Stützkonstruktion 4 eine Vielzahl von Solarzellenfeldern 23 zusätzlich zu den Windrotoren 9 angebracht.

Die Fig. 12 bis 15 zeigen eine Fahrbahntrasse 24 für Straßenfahrzeuge 25, die von einer Stützkonstruktion 4 umgeben ist. Die Stützkonstruktion 4 ist im wesentlichen derart ausgebildet, wie dies in den vorangegangenen Ausführungsbeispielen beschrieben wurde. Die Fahrbahntrasse 24 weist in ihrer Mitte in Längsrichtung einen Grünstreifen 26 auf. Im Grünstreifen 26 ist über ein Fundament 6 eine weitere Tragstütze 27 eingebracht, auf der das untere Ende der Rotorwelle 10 des Windrotors 9 drehbar ist. An der Tragstütze 27 sind weiterhin die Leitplanken 28 der Fahrbahntrasse 24 befestigt. Die Stützen 5 der Stützkonstruktion 4 sind durch ein Halteelement 18 miteinander verbunden, die das obere Ende der Rotorwelle 10 des Windrotors 9 drehbar aufnimmt, um den Windrotor 9 zu stabilisieren.

Gemäß Fig. 12 ist der Windrotor 9 als Flügelrotor 22 ausgebildet, der um seine Rotorwelle 10 drehbar und in Windangriffsrichtung verschwenkbar ist. In Fig. 13 wird der Windrotor 9 durch einen H-Rotor gebildet, während in Fig. 14 der Windrotor 9 ein mit Savonius-Rotor 12 als Anlaufhilfe versehener Darrieus-Rotor 11 ist. Der H-Rotor 21 weist umfangsseitig wenigstens drei Rotorblätter 29 auf, die über Streben 30 mit der Rotorwelle 10 stabilisierend verbunden sind.

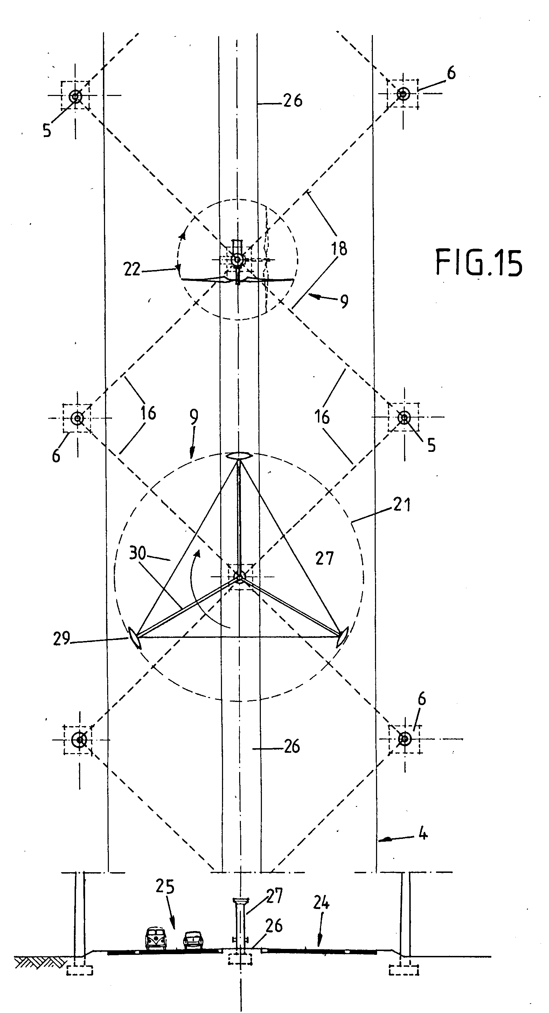

Fig. 15 verdeutlicht, daß innerhalb einer bestimmten, in der Regel definierten Strecke unterschiedliche Arten von Windrotoren 9 entlang der Stützkonstruktion 4 angeordnet werden können.

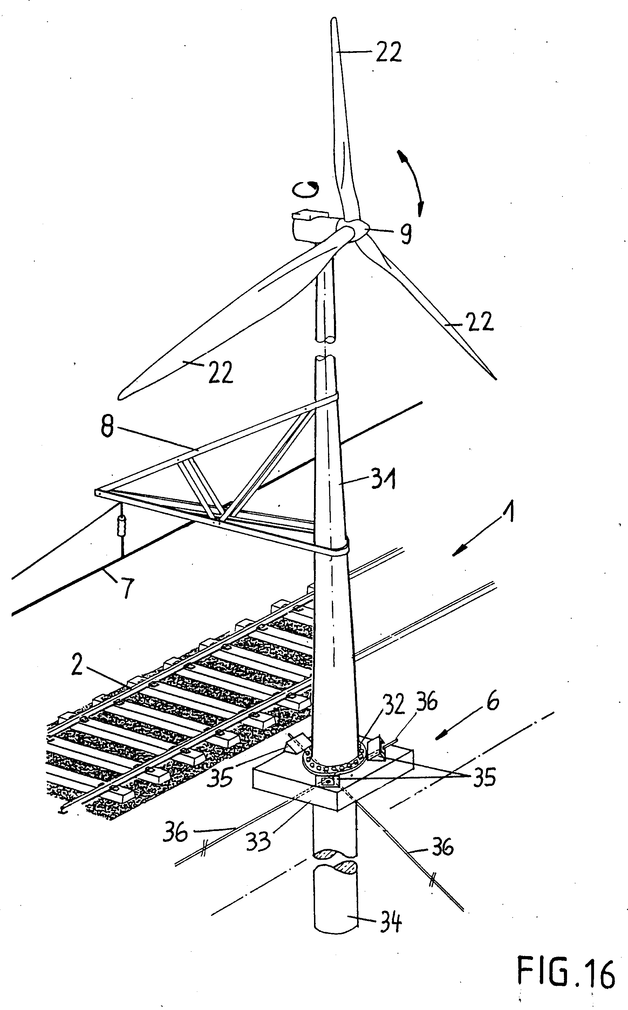

Die erfindungsgemäße Windkraftanlage ist gemäß den Fig. 16 bis 19 an einer Gleisanlage 1 für elektrisch betriebene Schienenfahrzeuge aufgestellt. Die Gleisanlage 1 wird hierbei durch einen Gleiskörper 2 gebildet, der von einer Oberleitung 7 eines Stromversorgungsnetzes für die elektrisch betriebenen Schienenfahrzeuge überspannt wird.

Die Windkraftanlage besteht im wesentlichen aus einem Tragmast 31, an dessen oberen Ende ein Windrotor 9 angeordnet ist, der in an sich bekannter Weise um die vertikale Achse des Tragmastes 31 drehbar ist. Der Windrotor 9 ist als Flügelrad ausgebildet, dessen Flügel 22 in einer vertikalen Ebene drehbar sind. Der durch die Rotation des Windrotors 9 erzeugte Strom wird zu einem nicht dargestellten Generator geleitet und über einen ebenfalls nicht dargestellten Transformator in die Oberleitung 7 des Stromversorgungsnetzes für die elektrisch betriebenen Schienenfahrzeuge eingespeist.

Gemäß Fig. 16 ist am Tragmast 31 eine Traverse 8 befestigt, die vorzugsweise eine Stahlgitterkonstruktion ist. Am vorderen Ende der Traverse 8 ist die Oberleitung 7 für den Gleiskörper 2 der Gleisanlage 1 gehaltert.

Der Fuß 32 des Tragmastes 31 ist auf einem Fundament 6 relativ geringer Abmessungen befestigt. Dieses Fundament 6 aus Beton besteht zunächst im wesentlichen aus einer Fundamentplatte 33 und einem lotrecht an dessen Unterseite angebrachten Fundamentpfahl 34, der in eine entsprechend im Erdboden eingebrachte Bohrung hineinragt.

Am Umfang der Fundamentplatte 33 gleichmäßig verteilt sind drei in einem Winkel von etwa 120° in einer horizontalen Ebene zueinander versetzt verlaufende Erdankereinrichtungen 35 angeordnet. Diese Erdankereinrichtungen 35 bestehen aus Erdankernägeln 36, die einerseits an der Fundamentplatte 33 befestigt und andererseits im Erdboden verlaufend mittels Beton unter hohem Druck mit diesem verpreßt sind.

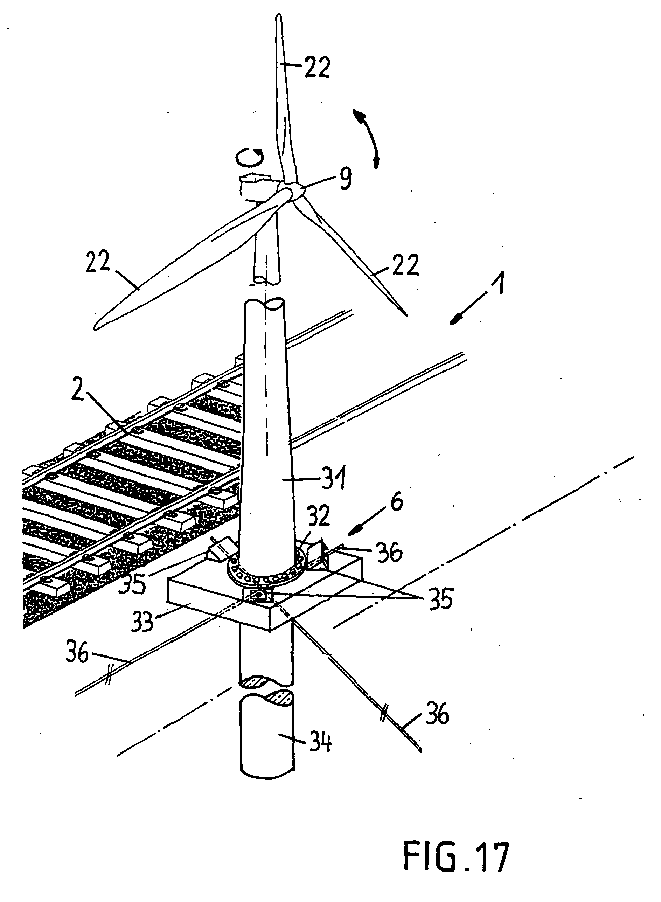

Fig. 17 zeigt eine Windkraftanlage ohne Tragmast für eine Oberleitung. Diese Windkraftanlage kann auch an nicht elektrifizierten Strecken einer Eisenbahn-Gleisanlage aufgestellt werden, um Strom beispielsweise für das öffentliche Stromnetz zu erzeugen. Andererseits kann diese Windkraftanlage auch an elektrifizierten Strecken aufgestellt werden, die bereits über Tragmasten 31 für die Oberleitung 7 des Stromnetzes für die elektrisch betriebenen Schienenfahrzeuge verfügt.

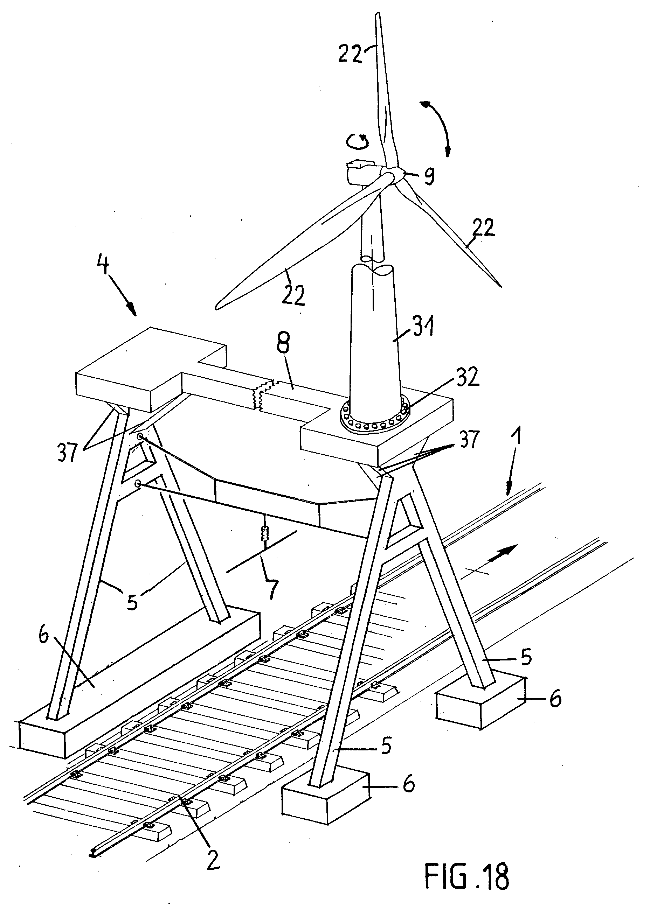

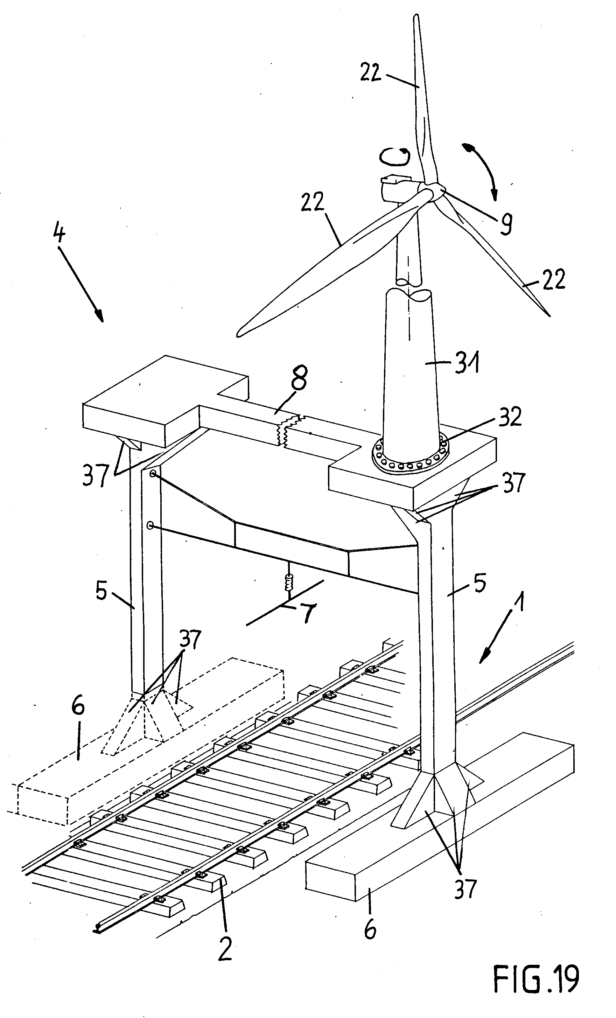

Die Fig. 18 und 19 zeigen eine Windkraftanlage, bei welcher der Tragmast 31 auf einer bockartigen Stützkonstruktion 4 ruht. Der Fuß 32 des Tragmastes 31 ist hierbei auf der quer zum Gleiskörper 2 verlaufenden Traverse 8 der Stützkonstruktion 4 befestigt. Gemäß Fig. 18 besteht die Stützkonstruktion 4 aus einer Mehrzahl schräg verlaufender Stützen 5, die an ihrem oberen Ende mit der Traverse 8 verbunden sind und deren untere Enden in einem Fundament 6 aus Beton verankert sind, so daß die Stützkonstruktion 4 den Gleiskörper 2 der Gleisanlage 1 überspannt. Im oberen Bereich der Stützen 5 ist die Oberleitung 7 für die elektrisch betriebenen Schienenfahrzeuge aufgehängt. Die oberen Enden der Stützen 5 und die entsprechenden Bereiche der Traverse 8 sind mittels Vouten 37 gegeneinander stabilisiert, so daß Fundamente 6 von nur geringen Abmessungen infolge der erhöhten Lastaufnahme der Stützkonstruktion 4 erforderlich sind.

Die Ausführungsform der Windkraftanlage nach Fig. 19 unterscheidet sich von der nach Fig. 18 dadurch, daß die Stützkonstruktion 4 aus jeweils einer durch die Traverse 8 verbundenen senkrechten Stütze 5 beidseitig des Gleiskörpers 2 besteht, wobei der Gleiskörper 2 der Gleisanlage 1 torartig überspannt wird. Darüber hinaus sind an den unteren Enden der Stützen 5 und dem jeweiligen Fundament 6 eine Mehrzahl von in Längsrichtung und in Querrichtung des Gleiskörpers 2 verlaufende Vouten 37 angeordnet, um die Stützkonstruktion 4 gegen Lastangriffe allseitig abzustützen. Es sei betont, daß anstelle oder zusätzlich zu den Vouten 37 am unteren Ende der Stützen 5 und dem Fundament 6 eine Ausbildung des Fundamentes 6 in gleicher Weise wie nach den Fig. 16 und 17 möglich ist.

### Liste der Bezugszeichen

- 1: Gleisanlage
- 2: Gleis
- 3: Eisenbahnzug
- 4: Stützkonstruktion
- 5: Stütze
- 6: Fundament
- 7: Oberleitung
- 8: Traverse
- 9: Windrotor
- 10: Rotorwelle
- 11: Darrieus-Rotor
- 12: Savonius-Rotor
- 13: Generator
- 14: Leitung
- 15: Sammeltransformator
- 16: Spannseil
- 17: Längsträger
- 18: Halteelement
- 19: Gittermast
- 20: Quertraverse
- 21: H-Rotor
- 22: Flügelrad
- 23: Solarzellenfeld
- 24: Fahrbahnstraße
- 25: Straßenfahrzeug
- 26: Grünstreifen
- 27: Tragstütze
- 28: Leitplanke
- 29: Rotorblatt
- 30: Strebe
- 31: Tragmast
- 32: Fuß
- 33: Fundamentplatte
- 34: Fundamentpfahl
- 35: Erdankereinrichtung
- 36: Erdankernagel

## Patentansprüche

1. Windkraftanlage zur permanenten Erzeugung elektrischer Energie mittels atmosphärischem Wind, mit einer Mehrzahl von Windrotoren, die über zumindest einen Generator Strom gewinnen, welcher in ein Stromversorgungsnetz übertragen wird,
dadurch gekennzeichnet,
daß die Mehrzahl von Windrotoren (9) an Stützkonstruktionen (4) rotierbar gelagert sind, welche eine Fahrbahn (24) bzw. eine Gleisanlage (1) oder dergleichen unter Einhaltung eines Fahrfreiraumes für die Straßenfahrzeuge (25) bzw. Schienenfahrzeuge (3) und eines Höhensicherheitsabstandes überspannen.

2. Windkraftanlage nach Anspruch 1, dadurch gekennzeichnet, daß jeder der Windrotoren (9) mit dem unteren Ende seiner Rotorwelle (10) rotierbar an den Stützkonstruktionen (4) gelagert ist und das obere Ende der Rotorwelle (10) jedes Windrotors (9) mittels Halteelementen (18) an den Stützkonstruktionen (4) befestigt und stabilisiert ist.

3. Windkraftanlage nach den Ansprüchen 1 und 2, dadurch gekennzeichnet, daß die Halteelemente (18) aus Gittermasten (19), Spannseilen (16), Streben, Querträgern oder dergleichen bestehen, die an den Stützkonstruktionen (4) verankert sind.

4. Windkraftanlage nach mindestens einem der Ansprüche 1 bis 3, dadurch gekennzeichnet, daß die Stützkonstruktionen (4) aus bogenförmigen, quer zur Fahrbahn (24) bzw. Gleisanlage (1) ausgerichteten Stahlbetonstützen oder Gittermasten bestehen.

5. Windkraftanlage nach mindestens einem der Ansprüche 1 bis 4, dadurch gekennzeichnet, daß die bogenförmigen Stützkonstruktionen (4) über zumindest einen Längsträger (17) miteinander verbunden sind.

6. Windkraftanlage nach mindestens einem der Ansprüche 1 bis 5, dadurch gekennzeichnet, daß die Windrotoren (9) entlang der Fahrbahn (24) bzw. Gleisanlage (1) in deren Längsrichtung oder Querrichtung hintereinander bzw. nebeneinander bzw. sowohl in Längsrichtung als auch in Querrichtung zueinander versetzt an den Stützkonstruktionen (4) angeordnet sind.

7. Windkraftanlage nach mindestens einem der Ansprüche 1 bis 6, dadurch gekennzeichnet, daß jedem Windrotor (9) ein Generator (13) zugeordnet und ein Sammeltransformator (15) für eine Mehrzahl von Windrotoren (9) vorgesehen ist und der gewonnene Strom in ein öffentliches Stromversorgungsnetz oder ein Betriebsstromnetz zur Versorgung einer elektrifizierten Eisenbahnstrecke einspeisbar ist.

8. Windkraftanlage mindestens einem der Ansprüche 1 bis 7, dadurch gekennzeichnet, daß die Windrotoren (9) Savonius-Rotoren (12) und/oder Darrieus-Rotoren (11) und/oder H-Rotoren (21) und/oder Flügel-Rotoren (22) sind.

9. Windkraftanlage nach mindestens einem der Ansprüche 1 bis 8, dadurch gekennzeichnet, daß die die Windrotoren (9) lagernden bogenförmigen Stützkonstruktionen (4) die Oberleitung (7) einer elektrifizierten Eisenbahnstrecke tragen.

10. Windkraftanlage nach mindestens einem der Ansprüche 1 bis 9, dadurch gekennzeichnet, daß die Stützkonstruktionen (4) jeweils mit Solarzellenfeldern (23) ausgerüstet ist, wobei die Solarzellenfelder (23) längs und/oder quer zur Fahrbahn (24) bzw. Gleisanlage (1) an den Stützkonstruktionen (4) angeordnet sind..

11. Windkraftanlage zur permanenten Erzeugung elektrischer Energie mittels atmosphärischem Wind, die insbesondere an einer Gleisanlage für elektrisch betriebene Schienenfahrzeuge aufstellbar ist, mit mindestens einem Tragmast, an dem wenigstens ein Windrotor rotierbar befestigt ist, der über einen Generator Strom gewinnt, welcher in ein Stromversorgungsnetz übertragen wird,
dadurch gekennzeichnet,
daß am Tragmast (31) eine die Oberleitung (7) der Gleisanlage (1) haltende Traverse (8) befestigt ist und daß der Tragmast (31) auf einem Fundament (6) relativ geringer Abmessung angeordnet ist, das mittels einer Mehrzahl von Erdankereinrichtungen (35) mit dem Erdboden fest verbunden ist.

12. Windkraftanlage nach Anspruch 11, dadurch gekennzeichnet, daß die Traverse (8) in einer radialen Richtung oder zwei entgegengesetzte radiale radialen Richtungen vom Tragmast (31) über die Gleisanlage (1) ragt.

13. Windkraftanlage nach dem Oberbegriff des Anspruches 11, dadurch gekennzeichnet, daß der Tragmast (31) auf einer einzelnen, freistehenden, unter Bildung einer Traverse (8) die Oberleitung (7) der Gleisanlage (1) haltenden, ein oder mehrere Gleiskörper (2) der Gleisanlage (1) überspannenden, bockartigen Stützkonstruktion (4) befestigt ist, die auf einem Fundament (6) relativ geringer Abmessung angeordnet ist.

14. Windkraftanlage nach mindestens einem der Ansprüche 11 bis 13, dadurch gekennzeichnet, daß der Tragmast (31) bzw. die freistehende bockartige Stützkonstruktion (4) mittels einer Mehrzahl von Erdankereinrichtungen (35) fest im Erdboden fundamentiert ist.

15. Windkraftanlage nach mindestens einem der Ansprüche 11 bis 14, dadurch gekennzeichnet, daß das Fundament (6) im wesentlichen aus einer Fundamentplatte (33), einem an deren Unterseite lotrecht angebrachten Fundamentpfahl (34) und der Mehrzahl von Erdankereinrichtungen (35) besteht.

16. Windkraftanlage nach mindestens einem der Ansprüche 11 bis 15, dadurch gekennzeichnet, daß jede der Erdankereinrichtungen (35) aus einer Mehrzahl von Erdankernägeln (36) besteht, die in Bezug auf den Umfang des Tragmastes (31) bzw. der Stütze (5) der Stützkonstruktion (4) gleichmäßig versetzt zueinander in einer im wesentlichen horizontalen Ebene oder leicht schräg geneigt nach unten in das Erdreich einerseits in der Fundamentplatte (33) und andererseits im Erdboden verankert sind.

17. Windkraftanlage nach mindestens einem der Ansprüche 11 bis 16, dadurch gekennzeichnet, daß drei Erdankereinrichtungen (35) in Bezug auf den Umfang des Tragmastes (31) bzw. der Stütze (5) etwa 120° zueinander versetzt in der Fundamentplatte (33) und im Erdboden verankert sind, wobei die Erdankernägel (36) einerseits in die Fundamentplatte (33) eingegossen und andererseits mittels Beton im Erdboden verpreßt sind.

18. Windkraftanlage nach mindestens einem der Ansprüche 11 bis 17, dadurch gekennzeichnet, daß die Erdankernägel (36) höchstens eine Länge aufweisen, die eine benachbarte Grundstücksgrenze nicht überschreitet.
